# EUROPÄISCHE PATENTSCHRIFT

(11) **EP 3 824 393 B1**
(45) Veröffentlichungstag und Bekanntmachung des Hinweises auf die Patenterteilung: **07.05.2025**
(21) Anmeldenummer: 19769558.8
(22) Anmeldetag: 04.07.2019
(51) Int. Cl.: G06F 13/40

(54) **SCHALTUNG ZUR GEPUFFERTEN ÜBERTRAGUNG VON DATEN**
CIRCUIT FOR A BUFFERED TRANSMISSION OF DATA
CIRCUIT DE TRANSMISSION DE DONNÉES AVEC MISE EN MÉMOIRE TAMPON

(30) Priorität: 17.07.2018 DE 102018005620
(43) Veröffentlichungstag der Anmeldung: 26.05.2021
(73) Patentinhaber: WAGO Verwaltungsgesellschaft mbH, 32423 Minden (DE)
(72) Erfinder: QUAKERNACK, Frank, 33615 Bielefeld (DE); SCHADDE, Frank, 32312 Lübbecke (DE)
(74) Vertreter: Koplin, Moritz
(86) Internationale Anmeldenummer: PCT/IB2019/055707
(87) Internationale Veröffentlichungsnummer: WO 2020/016693

(56) Entgegenhaltungen:
- EP-A2- 0 811 928
- EP-A2- 3 109 766
- US-A1- 2017 293 587
- SAAD MNEIMNEH ET AL: "Switching using parallel input-output queued switches with no speedup", IEEE / ACM TRANSACTIONS ON NETWORKING, IEEE / ACM, NEW YORK, NY, US, vol. 10, no. 5, 31 October 2002 (2002-10-31), pages 653 - 665, XP058093922, ISSN: 1063-6692, DOI: 10.1109/TNET.2002.803919

## Beschreibung

### GEBIET

Die vorliegende Erfindung bezieht sich auf eine Schaltung zur gepufferten Übertragung von Daten von mehreren Sendern zu einem Empfänger. Insbesondere bezieht sich die vorliegende Erfindung auf eine Schaltung mit vier Datenpuffern (im Folgenden als Buffer bezeichnet) und einer Steuerlogik, welche Schreib- und Lesezugriffe der Sender/des Empfängers auf die Buffer steuert.

### HINTERGRUND

Aus dem Stand der Technik sind Schaltungen zur gepufferten Übertragung von Daten bekannt, die pro Kanal drei Buffer aufweisen. Besagte Schaltungen stellen einen Buffer zum Schreiben von Daten und einen Buffer zum Auslesen von Daten bereit, während ein weiterer Buffer es ermöglicht, den Buffer, in den Daten geschrieben wurden mit dem Buffer, aus dem Daten ausgelesen werden, zu tauschen. Somit werden bei zwei Kanälen insgesamt sechs Buffer benötigt.

Aus der US 2017/293587 A1 ist ein Netzwerk mit Routern bekannt, die mit einer Vielzahl an Endpunkten verbunden sind. Mindestens einer der Router umfasst mehrere Interposer mit einer Anzahl von Warteschlangen. Mindestens einer der Router verfügt über einen Demultiplexer für jeden Interposer, der so konfiguriert ist, dass er gemultiplexte Daten vom Interposer empfängt und demultiplexte Daten an mehrere Warteschlangen weiterleitet.

### ZUSAMMENFASSUNG

Die Erfindung bereichert diesbezüglich den Stand der Technik, als Schaltungen gemäß Anspruch 1 eine Übertragung von Daten von zwei Sendern zu einem Empfänger mit vier Buffern ermöglichen, ohne den Schreibzugriff der Sender auf die Schaltung zu beschränken.

Dabei ist unter dem Begriff "Dateneingang", wie er in der Beschreibung und den Ansprüchen verwendet wird, insbesondere eine Kommunikationsverbindung zu verstehen, über die Daten an die Schaltung übertragen werden können. Ferner ist unter dem Begriff "Datenausgang", wie er in der Beschreibung und den Ansprüchen verwendet wird, insbesondere eine Kommunikationsverbindung zu verstehen, über die Daten von der Schaltung ausgegeben werden können. Die Kommunikationsverbindungen können bspw. elektrisch leitende Verbindungen sein, mittels derer Daten repräsentierende Strom- und/oder Spannungspegel (bspw. Logikpegel) an die Schaltung übermittelt bzw. von der Schaltung ausgegeben werden können.

Des Weiteren ist unter dem Begriff "Buffer", wie er in der Beschreibung und den Ansprüchen verwendet wird, insbesondere ein Speicherelement (Bauteil) oder ein adressierbarer Bereich in einem Speicherelement (Bauteil) zu verstehen. D. h., dass sich eine Unterscheidung zwischen Buffern sowohl auf eine logische Unterscheidung, bspw. hinsichtlich adressierbarer Bereiche in einem Speicherelement, als auch auf eine Unterscheidung hinsichtlich der involvierten Speicherelemente (Bauteile) beziehen kann. Ferner ist unter dem Begriff "Steuerlogik", wie er in der Beschreibung und den Ansprüchen verwendet wird, insbesondere eine Schaltung zu verstehen, die eingerichtet ist, ausgehend von einer Analyse des Zustands der Schaltung bzw. der an die Schaltung herangetragenen Lese- und/oder Schreibanforderungen ("read/write requests"), die Schaltung zu steuern und insbesondere zu wählen, aus welchem Buffer ein Datenpaket bereitzustellen und in welchen Buffer ein Datenpaket zu schreiben ist.

Des Weiteren beziehen sich die Begriffe "gültig" und "ungültig", wie sie in der Beschreibung und den Ansprüchen verwendet werden, insbesondere auf die Korrektheit von Daten. Ein ungültiges Datenpaket ist bspw. ein Datenpaket, bei dem beim Schreiben in einen Buffer ein Schreibfehler unterlaufen ist (und das somit in Form und/oder Inhalt in fehlerhafter Weise von einem avisierten Datenpaket abweicht), oder ein Datenpaket, das zwar korrekt in den Buffer geschrieben wurde aber (auf Grund eines vorausgegangenen Fehlers) falsche Informationen enthält.

Eine erfindungsgemäße Schaltung ermöglicht somit einen kontinuierlichen Fluss von Daten von den Sendern (bzw. dem oder den Datenerzeugern) zum Empfänger (bzw. dem oder den Datenkonsumenten), indem Datenpakete in die mit den Dateneingängen verbundenen Buffer geschrieben und beim Auslesen aus den Buffern bereitgestellt werden. Zudem ermöglicht eine erfindungsgemäße Schaltung einen Empfang von Daten, die über redundante Datenkanäle übertragen werden. Redundante Datenkanäle sind dabei insbesondere Datenkanäle, über die die gleichen Nutzdaten übertragen werden, wobei die Nutzdaten bspw. entlang unterschiedlicher (physikalischer) Übertragungswege oder zeitversetzt über den gleichen (physikalischen) Übertragungsweg übermittelt werden.

Die Schaltung kann bspw. als 4-Buffer FIFO in der Automatisierungstechnik verwendet werden und dort in einem Transceiver implementiert sein. Der Transceiver kann bspw. für die Weiterleitung von Prozessdaten von einem Lokalbus zu einem Feldbus (bspw. in einem Buskoppler oder einem Buscontroller) verwandt werden. Bspw. kann der Lokalbus eine logische Ringtopologie aufweisen, bei der Daten in beide Ringrichtungen (redundant) zwischen den Busteilnehmer ausgetauscht werden.

Die Prozessdaten können in die Buffer in Form von Datenpaketen/Datenblöcken (fester Länge) geschrieben werden. Dabei kann die Steuerlogik überwachen, dass die Daten eine vorher konfigurierte Datenblocklänge nicht überschreiten. Nachdem die Daten in einen Buffer geschrieben sind, können die Daten vom jeweiligen Sender als "gültig" oder als "ungültig" gekennzeichnet werden. Im Fehlerfall kann der Empfänger dann mit Daten aus dem anderen Buffer versorgt werden.

Vorzugsweise ist die Steuerlogik eingerichtet, zum Auslesen von Daten anstatt des Tauschens des aktuell mit dem Datenausgang verbundenen Buffers mit dem nicht-verbunden Buffer, den aktuell mit dem ersten Dateneingang verbundenen Buffer mit dem Datenausgang zu verbinden, wenn eine Ausleseanforderung signalisiert wird und gleichzeitig signalisiert wird, dass ein Schreiben von ersten Daten in den mit dem ersten Dateneingang verbundenen Buffer vollendet worden ist, und den aktuell mit dem zweiten Dateneingang verbundenen Buffer mit dem Datenausgang zu verbinden, wenn eine Ausleseanforderung signalisiert wird und gleichzeitig signalisiert wird, dass ein Schreiben von zweiten Daten in den mit dem zweiten Dateneingang verbundenen Buffer vollendet worden ist.

Dabei ist die Formulierung "gleichzeitig signalisiert", wie sie in der Beschreibung und den Ansprüchen verwendet wird, insbesondere so zu verstehen, dass ein zeitlicher Versatz zwischen zwei Signalen so gering ist, dass die Steuerlogik das spätere Signal empfängt, bevor die Schaltung einen auf dem früheren Signal basierenden Steuerbefehl erzeugt hat, bzw. dass der zeitliche Abstand innerhalb eines Intervalls liegt, welches die Steuerlogik abwartet, bevor der Steuerbefehl erzeugt wird.

Der erste Dateneingang oder der zweite Dateneingang kann priorisiert und die Steuerlogik ferner eingerichtet sein, wenn eine Ausleseanforderung signalisiert wird und gleichzeitig signalisiert wird, dass ein Schreiben von Daten in den mit dem ersten Dateneingang verbundenen Buffer und ein Schreiben von Daten in den mit dem zweiten Dateneingang verbundenen Buffer vollendet worden ist, zum Auslesen von Daten den aktuell mit dem priorisierten Dateneingang verbundenen Buffer mit dem Datenausgang zu verbinden.

Somit werden, wenn Daten über beide Dateneingänge gleichzeitig empfangen werden, (zuerst oder nur) die über den priorisierten Dateneingang empfangenen Daten weitergeleitet.

Das Verbinden eines Buffers mit dem ersten Dateneingang, mit dem zweiten Dateneingang oder mit dem Datenausgang kann ein Ändern eines Adressenversatzes ("address offset") umfassen.

Das Verbinden eines Buffers mit dem ersten Dateneingang, mit dem zweiten Dateneingang oder mit dem Datenausgang kann auch ein Umschalten zwischen Signalpfaden umfassen.

Vorzugsweise ist die Schaltung in einen Busteilnehmer, insbesondere einen Bustransceiver integriert.

Vorzugsweise ist die Steuerlogik eingerichtet, ein Flag, zu setzen, wenn Daten in einen Buffer gültig geschrieben und der Buffer getauscht wurde, und das Flag zyklisch zurückzusetzen, wobei bei gesetztem Flag ein Tauschen der aktuell mit dem ersten und zweiten Dateneingang verbundenen Buffer mit einem anderen Buffer unterdrückt wird.

Vorzugsweise ist die Schaltung in einem System, mit einem ersten Sender, einem zweiten Sender und einem Empfänger angeordnet, wobei der erste Sender mit dem ersten Dateneingang, der zweite Sender mit dem zweiten Dateneingang und der Empfänger mit dem Datenausgang verbunden ist, und die Sender eingerichtet sind, Datenpakete über die Dateneingänge an die Schaltung zu übertragen und der Schaltung ein Ende eines Schreibvorgangs zu signalisieren.

Dabei sind unter dem Begriff "Datenpaket", wie er in der Beschreibung und den Ansprüchen verwendet wird, insbesondere binär kodierte Informationen zu verstehen, die in einem Block gesendet/empfangen werden, wobei die Informationen typischerweise in einem Sinnzusammenhang stehen. Zudem weist ein Datenpaket oftmals eine festgelegte Struktur auf, die es ermöglicht, einer binär kodierten Information einen entsprechenden Abschnitt des Datenpakets zuzuweisen.

Vorzugsweise ist der Empfänger eingerichtet, der Schaltung eine Ausleseanforderung zu signalisieren und ein Datenpaket über den Datenausgang der Schaltung auszulesen.

Vorzugsweise weist die Schaltung s+2 Buffer auf, wobei s die Anzahl an Sendern angibt.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1 eine erfindungsgemäße Schaltung gemäß einem Ausführungsbeispiel zeigt;
Fig. 2 Abläufe in der Schaltung der Fig. 1 bei Schreib- und Lesezugriffen illustriert;
Fig. 3 ein Ablaufdiagramm zum Betrieb der in Fig. 1 gezeigten Schaltung zeigt;
Fig. 4a ein Zustandsdiagramm der in Fig. 1 gezeigten Schaltung zeigt;
Fig. 4b Pseudocode zum in Fig. 4a gezeigten Zustandsdiagramm zeigt; und
Fig. 5 eine mögliche Verwendung der in Fig. 1 gezeigten Schaltung zur redundanten Übertragung von Daten illustriert.

Dabei sind in den Zeichnungen gleiche und funktional ähnliche Elemente durch gleiche Bezugszeichen gekennzeichnet.

### DETAILLIERTE BESCHREIBUNG

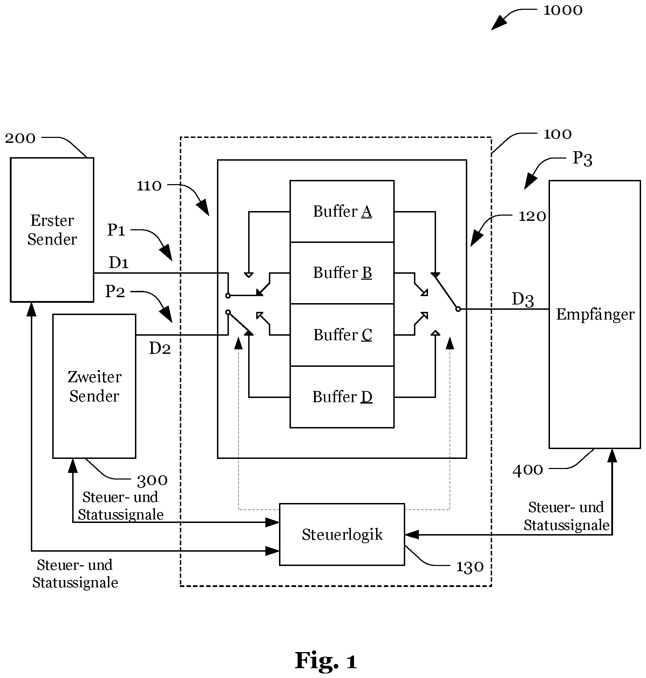

Fig. 1 zeigt eine beispielhafte Schaltung 100 mit einem ersten Buffer A, einem zweiten Buffer B, einem dritten Buffer C und einem vierten Buffer D. Die Buffer A-D können als mehrere adressierbare Bereiche in einem Speicherelement (z. B. "DPRAM Pages") oder als mehrere eigenständige Speicherelemente (z. B. mehrere DPRAMs) ausgebildet sein. Die Schaltung 100 umfasst einen ersten Dateneingang P1 für erste Daten D1, einen zweiten Dateneingang P2 für zweite Daten D2 und einen Datenausgang P3 zur Ausgabe von Daten D3. Mit dem ersten Dateneingang P1 ist ein erster Sender 200, mit dem zweiten Dateneingang P2 ist ein zweiter Sender 300 und mit dem Datenausgang P3 ist ein Empfänger 400 verbunden.

Die Schaltung 100 umfasst zudem eine Steuerlogik 130. Die Steuerlogik 130 ist eingerichtet, den ersten Dateneingang P1 mit einem der Buffer A-D zu verbinden, den zweiten Dateneingang P2 mit einem der Buffer A-D zu verbinden und den Datenausgang P3 mit einem der Buffer A-D zu verbinden. Insbesondere kann, wie in Fig. 1 gezeigt, zwischen den Dateneingängen P1, P2 und den Buffern A-D ein erster Schalter 110 vorgesehen sein, der es ermöglicht, eine erste Datenverbindung zwischen dem ersten Sender 200 und einem der Buffer A-D herzustellen und gleichzeitig eine zweite Datenverbindung zwischen dem zweiten Sender 300 und einem der Buffer A-D herzustellen. Durch die schaltbaren Verbindungen können die Sender 200, 300 im Wechsel jeden der Buffer A-D mit Daten beschreiben. Wie in Fig. 1 angedeutet, kann der erste Schalter 110 (bzw. die Schalterstellung) über eine Steuerleitung von der Steuerlogik 130 gesteuert werden.

Ferner kann, wie in Fig. 1 gezeigt, zwischen dem Datenausgang P3 und den Buffern A-D ein zweiter Schalter 120 vorgesehen sein, der es ermöglicht, eine dritte Datenverbindung zwischen dem Empfänger 400 und einem der Buffer A-D herzustellen. Durch die schaltbare Verbindung können dem Empfänger 400 aus jedem der Buffer A-D Daten bereitgestellt werden. Wie der erste Schalter 110, kann auch der zweite Schalter 120 mittels einer Steuerleitung von der Steuerlogik 130 gesteuert werden, bspw. indem die Steuerlogik 130 über die Steuerleitung ein Steuersignal zu den Schaltern 110, 120 überträgt, das den Schaltern 110, 120 signalisiert, welcher der Buffer A-D mit den Sendern 200, 300 und dem Empfänger 400 zu verbinden ist und welcher der Buffer A-D nicht zu verbinden ist.

Dabei versteht es sich, dass die in Fig. 1 dargestellten Schalter 110, 120 primär zur Illustration des Umschaltens zwischen verschiedenen Verbindungen dienen. Die Erfindung ist jedoch nicht auf die Verwendung bestimmter Schalter 110, 120 beschränkt. Vielmehr können die in Fig. 1 gezeigten Schalter 110, 120 in Form beliebiger Einrichtungen implementiert sein, die ein Umschalten zwischen den Buffern, d. h. ein Trennen einer bestehenden Verbindung und das Herstellen einer neuen Verbindung, ermöglichen.

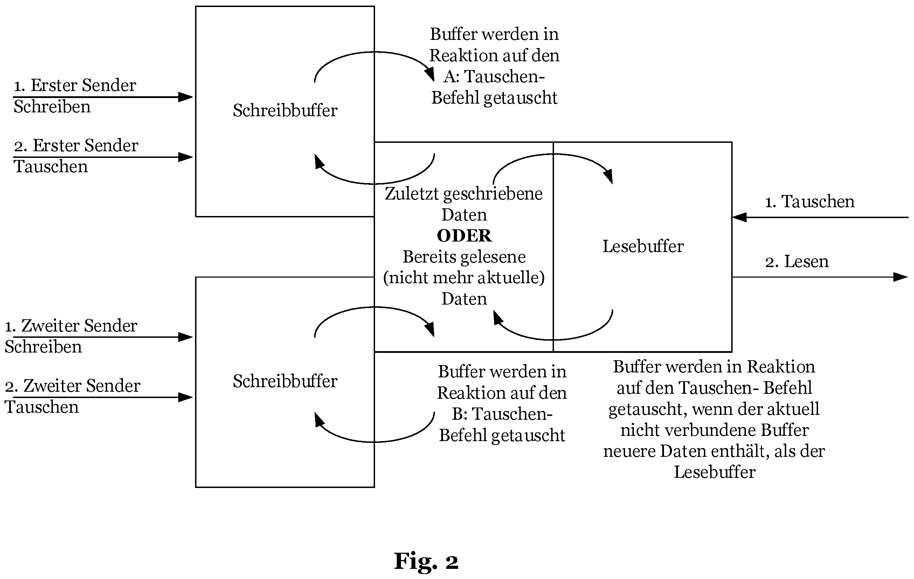

Wie in Fig. 2 veranschaulicht, können der erste Sender 200 und der zweite Sender 300 in die mit Ihnen verbundenen Buffer A-D Daten schreiben und dem Empfänger 400 aus dem mit ihm verbundenen Buffer A-D Daten bereitgestellt werden. Nach dem Schreiben von Daten in einen mit einem Sender 200, 300 verbundenen Buffer A-D kann der jeweilige Sender 200, 300 einen Buffertausch auslösen. Dazu kann der jeweilige Sender 200, 300 der Logikschaltung 130 signalisieren, dass ein Schreibvorgang erfolgreich abgeschlossen wurde und die in den Buffer A-D geschriebenen Daten gültig sind. Der Buffertausch kann dann zwischen dem beschriebenen Buffer A-D und dem nicht-verbundenen Buffer A-D durchgeführt werden.

Somit kann, wenn erste Daten D1 über den ersten Dateneingang P1 in den aktuell mit dem ersten Dateneingang P1 verbundenen Buffer A-D gültig geschrieben worden sind, der aktuell mit dem ersten Dateneingang P1 verbundene Buffer A-D mit dem nicht-verbundenen Buffer A-D getauscht werden und, wenn zweite Daten D2 über den zweiten Dateneingang P2 in den aktuell mit dem zweiten Dateneingang P2 verbundenen Buffer A-D gültig geschrieben worden sind, der aktuell mit dem zweiten Dateneingang P2 verbundene Buffer A-D mit dem nicht-verbundenen Buffer A-D getauscht werden. Zum Auslesen der Daten D3 kann dann der aktuell mit dem Datenausgang P3 verbundene Buffer A-D mit dem nicht-verbunden Buffer A-D getauscht werden (wobei dies davon abhängig gemacht werden kann, ob der nicht-verbundene Buffer A-D neuere gültig geschriebene Daten aufweist, als der aktuell mit dem Datenausgang P3 verbundene Buffer A-D).

Wenn der Steuerlogik 130 gleichzeitig signalisiert wird, dass erste Daten D1 über den ersten Dateneingang P1 in den aktuell mit dem ersten Dateneingang P1 verbundenen Buffer A-D gültig geschrieben wurden und zweite Daten D2 über den zweiten Dateneingang P2 in den aktuell mit dem zweiten Dateneingang P2 verbundenen Buffer A-D gültig geschrieben wurden, kann die Steuerlogik 130 ferner eingerichtet sein, zu veranlassen, dass der aktuell mit dem ersten Dateneingang P1 oder dem zweiten Dateneingang P2 verbundene Buffer A-D direkt mit dem aktuell nicht-verbundenen Buffer A-D getauscht wird, je nachdem, ob der erste Dateneingang P1 oder der zweite Dateneingang P2 durch die Schaltung 100 priorisiert wird. Der zu priorisierende Dateneingang P1, P2 kann (unveränderlich) festgelegt sein oder von der Steuerlogik 130 von Fall zu Fall steuersignal- oder zufallsbasiert bestimmt werden.

Wird der Steuerlogik 130 gleichzeitig signalisiert, dass dem Empfänger 400 Daten D3 bereitzustellen sind und erste Daten D1 über den ersten Dateneingang P1 in den aktuell mit dem ersten Dateneingang P1 verbundenen Buffer A-D gültig geschrieben wurden oder zweite Daten D2 über den zweiten Dateneingang P2 in den aktuell mit dem zweiten Dateneingang P2 verbundenen Buffer A-D gültig geschrieben wurden, kann die Steuerlogik 130 zudem eingerichtet sein, zu veranlassen, dass der aktuell mit dem ersten Dateneingang P1 bzw. der aktuell mit dem zweiten Dateneingang P2 verbundene Buffer A-D direkt mit dem aktuell mit dem Datenausgang P3 verbundenen Buffer A-D getauscht wird.

Zudem kann, wenn der Steuerlogik 130 gleichzeitig signalisiert wird, dass dem Empfänger 400 Daten D3 bereitzustellen sind und erste Daten D1 über den ersten Dateneingang P1 in den aktuell mit dem ersten Dateneingang P1 verbundenen Buffer A-D gültig geschrieben wurden und zweite Daten D2 über den zweiten Dateneingang P2 in den aktuell mit dem zweiten Dateneingang P2 verbundenen Buffer A-D gültig geschrieben wurden, die Steuerlogik 130 eingerichtet sein, zu veranlassen, dass der aktuell mit dem ersten Dateneingang P1 oder dem zweiten Dateneingang P2 verbundene Buffer A-D direkt mit dem aktuell mit dem Datenausgang P3 verbundenen Buffer A-D getauscht wird, je nachdem, ob der erste Dateneingang P1 oder der zweite Dateneingang P2 durch die Schaltung 100 priorisiert wird.

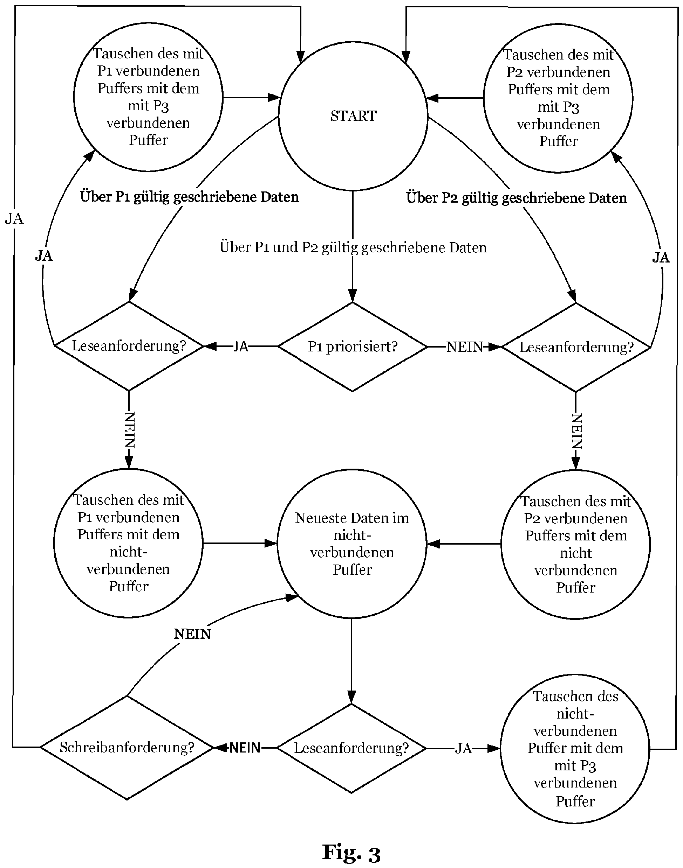

Je nach Verwendung der Schaltung 100 kann die Steuerlogik 130 eine, mehrere oder alle der vorhergehenden Regeln, welche in Fig. 3 beispielhaft mittels eines Ablaufdiagramms illustriert sind, anwenden. Dabei können die Sender 200, 300 jederzeit Daten in die Schaltung 100 schreiben und der Empfänger 400 jederzeit Daten aus der Schaltung 100 auslesen.

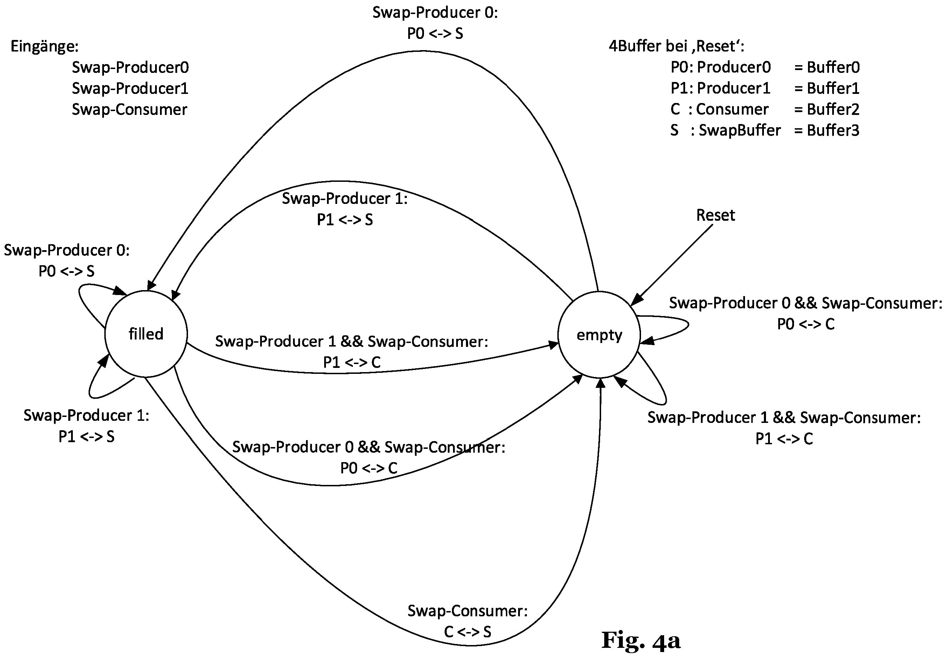

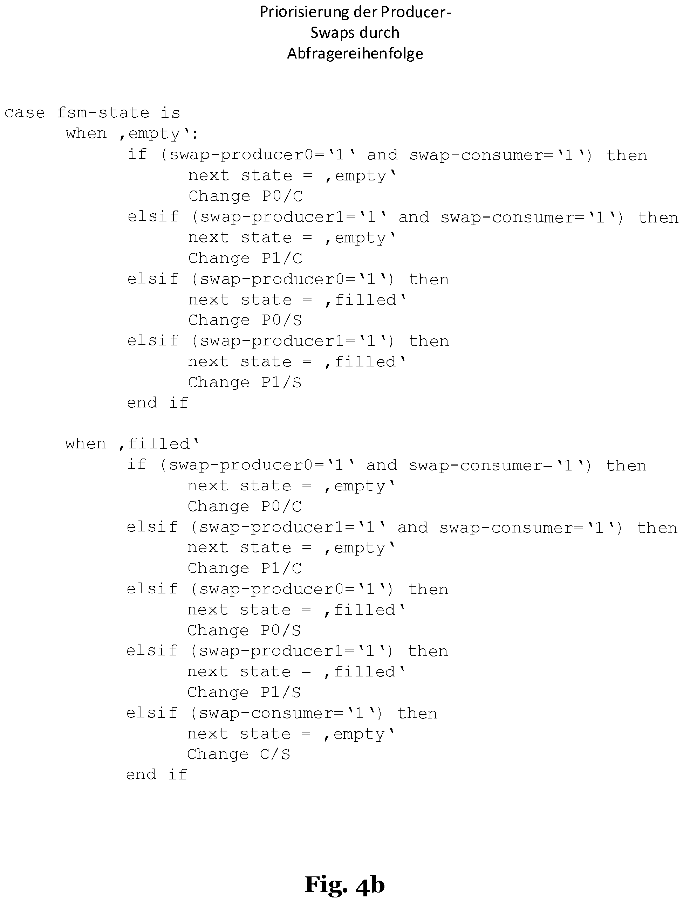

Wie in Fig. 4a und 4b gezeigt, weist die Schaltung 100 zwei Zustände auf, "empty" (leer) und "filled" (voll). Nach einem Neustart oder einem Reset ist die Schaltung 100 im Zustand "empty". Fordern in diesem Zustand ein Sender 200, 300 und ein Empfänger 400 gleichzeitig einen Buffertausch an, werden die mit dem jeweiligen Sender 200, 300 und dem Empfänger 400 verbundenen Buffer A-D direkt getauscht und die Schaltung 100 verbleibt im Zustand "empty". Fordert in diesem Zustand jedoch nur ein Sender 200, 300 einen Buffertausch an, wird der mit dem jeweiligen Sender 200, 300 verbundene Buffer A-D mit dem freien Buffer ("Swap-Buffer") getauscht und die Schaltung 100 wechselt in den Zustand "filled".

Fordert in diesem Zustand wiederrum nur ein Sender 200, 300 (aber nicht gleichzeitig der Empfänger 400) einen Buffertausch an, wird der mit dem jeweiligen Sender 200, 300 verbundene Buffer A-D mit dem freien Buffer A-D ("Swap-Buffer") getauscht und die Schaltung 100 verbleibt in den Zustand "filled". Fordert jedoch der Empfänger 400 einen Buffertausch an, wird der mit dem Empfänger 400 verbundene Buffer A-D mit dem freien Buffer A-D ("Swap-Buffer") oder, im Falle einer gleichzeitigen Anforderung eines Buffertausches durch den Empfänger 400 und einen Sender 200, 300, direkt mit dem mit dem jeweiligen Sender 200, 300 verbundenen Buffer A-D getauscht und die Schaltung 100 geht in den Zustand "empty" über.

Neben den in Fig. 3, Fig. 4a und Fig. 4b illustrierten Regeln kann die Steuerlogik 130 zudem eingerichtet sein, (beliebige) weitere Regeln zu befolgen. Bspw. kann die Steuerlogik 130 eingerichtet sein, den Betrieb der Schaltung 100 in Zyklen einzuteilen und nach dem Beschreiben und Tauschen eines mit einem Dateneingang P1, P2 verbundenen Buffers A-D ein Tauschen eines danach im selben Zyklus beschriebenen Buffers A-D zu unterdrücken. Zum Beispiel kann die Steuerlogik 130 eingerichtet sein, nach dem Beschreiben und Tauschen eines mit einem Dateneingang P1, P2 verbundenen Buffers A-D ein Flag (d. h. einen Indikatorwert) zu setzen und während das Flag gesetzt ist, das Tauschen der mit einem Dateneingang P1, P2 verbundenen Buffer A-D zu unterdrücken, wobei das Flag am Ende jedes Zyklus zurückgesetzt wird. Das Ende eines Zyklus kann dabei durch den Ablauf eines Zeitintervalls oder durch den Empfang eines Zyklussignals definiert sein. Dadurch kann erreicht werden, dass ein schnellerer zweier redundanter Datenkanäle priorisiert wird.

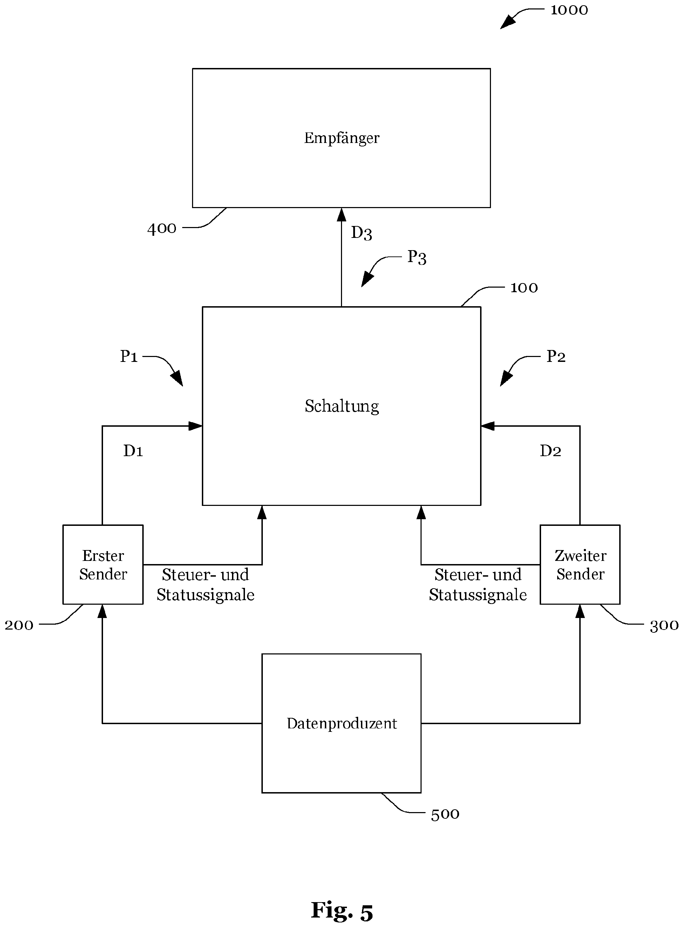

Bspw. können der erste Sender 200 und der zweite Sender 300 redundante Daten D1, D2 übertragen, so dass im fehlerfreien Betrieb die ersten Daten D1 und die zweiten Daten D2 miteinander übereinstimmen und (im Wesentlichen) zeitgleich empfangen werden. Zum Beispiel können der erste Sender 200 und der zweite Sender 300, wie in Fig. 5 gezeigt, zusammen mit einem Datenproduzenten 500 und der Schaltung 100 in einer Ringtopologie angeordnet sein, wobei die Übertragung der Daten D1, D2 (in beide Ringrichtungen) redundant erfolgt. Bspw. kann der Datenproduzent 500 eingerichtet sein, im fehlerfreien Betrieb in regelmäßigen Intervallen Datenpakete über die Sender 200, 300 (die bspw. als Transceiver ausgebildet sein können) und die Schaltung 100 zum Empfänger 400 zu übertragen, wobei der Empfänger 400 in regelmäßigen Intervallen Datenpakete von der Schaltung 100 anfordert, bzw. in regelmäßigen Intervallen Datenpakete aus der Schaltung 100 ausliest.

### BEZUGSZEICHENLISTE

- 100: Schaltung
- 110: Erster Schalter
- 120: Zweiter Schalter
- 130: Steuerlogik
- 200: Erster Sender
- 300: Zweiter Sender
- 400: Empfänger
- 500: Datenproduzent
- 1000: System
- A: Buffer
- B: Buffer
- C: Buffer
- D: Buffer
- P1: Erster Dateneingang
- P2: Zweiter Dateneingang
- P3: Datenausgang

## Patentansprüche

1. Schaltung (100) mit
vier Buffern (A, B, C, D),
einem ersten Dateneingang (P1) für erste Daten (D1),
einem zweiten Dateneingang (P2) für zweite Daten (D2),
einem Datenausgang (P3) und
einer Steuerlogik (130), wobei die Steuerlogik (130) eingerichtet ist,
den ersten Dateneingang (P1) mit einem ersten Buffer (A) der vier Buffer (A-D) zu verbinden,
den zweiten Dateneingang (P2) mit einem zweiten Buffer (B) der vier Buffer (A-D) zu verbinden,
den Datenausgang (P3) mit einem dritten Buffer (C) der vier Buffer (A-D) zu verbinden, **dadurch gekennzeichnet dass**
die Verbindung zwischen dem ersten Dateneingang (P1) und dem aktuell mit dem ersten Dateneingang (P1) verbundenen Buffer (A-D) zu trennen und eine Verbindung zwischen dem ersten Dateneingang (P1) und dem aktuell nicht-verbundenen Buffer (A-D) herzustellen, wenn erste Daten (D1) über den ersten Dateneingang (P1) in den aktuell mit dem ersten Dateneingang (P1) verbundenen Buffer (A-D) gültig geschrieben sind,
die Verbindung zwischen dem zweiten Dateneingang (P2) und dem aktuell mit dem zweiten Dateneingang (P2) verbundenen Buffer (A-D) zu trennen und eine Verbindung zwischen dem zweiten Dateneingang (P2) und dem aktuell nicht-verbundenen Buffer (A-D) herzustellen, wenn zweite Daten (D2) über den zweiten Dateneingang (P2) in den aktuell mit dem zweiten Dateneingang (P2) verbundenen Buffer (A-D) gültig geschrieben sind, und
zum Auslesen von Daten (D3) die Verbindung zwischen dem Datenausgang (P3) und dem aktuell mit dem Datenausgang (P3) verbundenen Buffer (A-D) zu trennen und eine Verbindung zwischen dem Datenausgang (P3) und dem aktuell nicht-verbunden Buffer (A-D) herzustellen, wenn der nicht-verbundene Buffer (A-D) neuere gültig geschriebene Daten aufweist.

2. Schaltung (100) nach Anspruch 1, wobei der erste Dateneingang (P1) oder der zweite Dateneingang (P2) priorisiert ist und die Steuerlogik (130) ferner eingerichtet ist,
wenn eine Ausleseanforderung signalisiert wird und gleichzeitig signalisiert wird, dass
ein Schreiben von ersten Daten (D1) in den mit dem ersten Dateneingang (P1) verbundenen Buffer (A-D), und
ein Schreiben von zweiten Daten (D2) in den mit dem zweiten Dateneingang (P2) verbundenen Buffer (A-D) vollendet worden ist,
zum Auslesen von Daten (D3) den aktuell mit dem priorisierten Dateneingang (P1, P2) verbundenen Buffer (A-D) mit dem Datenausgang (P3) zu verbinden.

3. Schaltung (100) nach Anspruch 1 oder 2, wobei das Verbinden eines Buffers (A-D) mit dem ersten Dateneingang (P1), mit dem zweiten Dateneingang (P2) oder mit dem Datenausgang (P3) ein Ändern eines Adressenversatzes umfasst.

4. Schaltung (100) nach Anspruch 1 oder 2, wobei das Verbinden eines Buffers (A-D) mit dem ersten Dateneingang (P1), mit dem zweiten Dateneingang (P2) oder mit dem Datenausgang (P3) ein Umschalten zwischen Signalpfaden umfasst.

5. Schaltung (100) nach einem der Ansprüche 1 bis 4, wobei die Schaltung (100) in einen Busteilnehmer, insbesondere einen Bustransceiver integriert ist.

6. Schaltung (100) nach einem der Ansprüche 1 bis 5, wobei die Steuerlogik (130) eingerichtet ist,
ein Flag, zu setzen, wenn Daten in einen Buffer (A-D) gültig geschrieben und die Verbindung mit dem Buffer (A-D) getrennt wurde, und
das Flag zyklisch zurückzusetzen,
wobei bei gesetztem Flag ein Trennen der Verbindung der aktuell mit dem ersten und zweiten Dateneingang (P1, P2) verbundenen Buffer (A-D) und Herstellen einer Verbindung mit einem anderen Buffer (A-D) unterdrückt wird.

7. System (1000), mit
einem ersten Sender (200),
einem zweiten Sender (300),
einem Empfänger (400), und
einer Schaltung (100) nach einem der Ansprüche 1 bis 6, wobei
der erste Sender (200) mit dem ersten Dateneingang (P1),
der zweite Sender (300) mit dem zweiten Dateneingang (P2) und
der Empfänger (400) mit dem Datenausgang (P3) verbunden ist,
wobei die Sender (200, 300) eingerichtet sind, Datenpakete über die Dateneingänge (P1, P2) an die Schaltung (100) zu übertragen und der Schaltung (100) ein Ende eines Schreibvorgangs zu signalisieren.

8. System (1000) nach Anspruch 7, wobei der Empfänger (400) eingerichtet ist, der Schaltung (100) eine Ausleseanforderung zu signalisieren und ein Datenpaket über den Datenausgang (P3) der Schaltung (100) auszulesen.

9. System (1000) nach einem der Ansprüche 7 oder 8, wobei die Schaltung (100) s+2 Buffer (A-D) aufweist, wobei s die Anzahl an Sendern (200, 300) angibt.

## Claims

1. Circuit (100) with
four buffers (A, B, C, D),
a first data input (P1) for first data (D1),
a second data input (P2) for second data (D2),
a data output (P3) and
a control logic (130), wherein the control logic (130) is configured to
connect the first data input (P1) to a first buffer (A) of the four buffers (A-D),
connect the second data input (P2) to a second buffer (B) of the four buffers (A-D),
connect the data output (P3) to a third buffer (C) of the four buffers (A-D), **characterized in that**
to disconnect the connection between the first data input (P1) and the buffer (A-D) currently connected to the first data input (P1) and establish a connection between the first data input (P1) and the currently unconnected buffer (A-D) when first data (D1) is validly written to the buffer (A-D) currently connected to the first data input (P1) via the first data input (P1),
to disconnect the connection between the second data input (P2) and the buffer (A-D) currently connected to the second data input (P2) and establish a connection between the second data input (P2) and the currently unconnected buffer (A-D) when second data (D2) is validly written to the buffer (A-D) currently connected to the second data input (P2) via the second data input (P2), and
to read data (D3), to disconnect the connection between the data output (P3) and the buffer (A-D) currently connected to the data output (P3) and establish a connection between the data output (P3) and the currently unconnected buffer (A-D) when the unconnected buffer (A-D) has newer validly written data.

2. Circuit (100) according to claim 1, wherein the first data input (P1) or the second data input (P2) is prioritized and the control logic (130) is also configured,
when a read request is signaled and it is simultaneously signaled that
first data (D1) is being written to the buffer (A-D) connected to the first data input (P1), and
writing of second data (D2) to the buffer (A-D) connected to the second data input (P2) has been completed,
to read data (D3), to connect the buffer (A-D) currently connected to the prioritized data input (P1, P2) to the data output (P3).

3. Circuit (100) according to claim 1 or 2, wherein connecting a buffer (A-D) to the first data input (P1), to the second data input (P2) or to the data output (P3) includes changing an address offset.

4. Circuit (100) according to claim 1 or 2, wherein connecting a buffer (A-D) to the first data input (P1), to the second data input (P2) or to the data output (P3) includes switching between signal paths.

5. Circuit (100) according to any one of claims 1 to 4, wherein the circuit (100) is integrated into a bus subscriber, in particular a bus transceiver.

6. Circuit (100) according to any one of claims 1 to 5, wherein the control logic (130) is configured to
set a flag when data has been validly written to a buffer (A-D) and the connection to the buffer (A-D) has been disconnected, and
cyclically reset the flag,
wherein, when a flag is set, disconnection of the connection to the buffer (A-D) currently connected to the first and second data input (P1, P2) and establishment of a connection to another buffer (A-D) is disabled.

7. System (1000), with
a first transmitter (200),
a second transmitter (300),
a receiver (400), and
a circuit (100) according to any one of claims 1 to 6, wherein
the first transmitter (200) is connected to the first data input (P1),
the second transmitter (300) is connected to the second data input (P2) and
the receiver (400) is connected to the data output (P3),
wherein the transmitters (200, 300) are configured to transfer data packets via the data inputs (P1, P2) to the circuit (100) and to signal an end of a write operation to the circuit (100).

8. System (1000) according to claim 7, wherein the receiver (400) is configured to signal a read request to the circuit (100) and to read a data packet via the data output (P3) of the circuit (100).

9. System (1000) according to any one of claims 7 or 8, wherein the circuit (100) has s+2 buffers (A-D), wherein s indicates the number of transmitters (200, 300).

## Revendications

1. Circuit (100) avec
quatre tampons (A, B, C, D),
une première entrée de données (P1) pour des premières données (D1),
une deuxième entrée de données (P2) pour des deuxièmes données (D2),
une sortie de données (P3) et
une logique de commande (130), dans lequel la logique de commande (130) est configurée pour
connecter la première entrée de données (P1) à un premier tampon (A) des quatre tampons (A-D),
connecter la deuxième entrée de données (P2) à un deuxième tampon (B) des quatre tampons (A-D),
connecter la sortie de données (P3) à un troisième tampon (C) des quatre tampons (A-D), **caractérisé en ce que**
la connexion entre la première entrée de données (P1) et le tampon (A-D) actuellement connecté à la première entrée de données (P1) est coupée et une connexion est établie entre la première entrée de données (P1) et le tampon (A-D) actuellement non connecté lorsque des premières données (D1) sont valablement écrites par l'intermédiaire de la première entrée de données (P1) dans le tampon (A-D) actuellement connecté à la première entrée de données (P1),
la connexion entre la deuxième entrée de données (P2) et le tampon (A-D) actuellement connecté à la deuxième entrée de données (P2) est coupée et une connexion est établie entre la deuxième entrée de données (P2) et le tampon (A-D) actuellement non connecté lorsque des deuxièmes données (D2) sont valablement écrites par l'intermédiaire de la deuxième entrée de données (P2) dans le tampon (A-D) actuellement connecté à la deuxième entrée de données (P2), et
pour la lecture de données (D3), la connexion entre la sortie de données (P3) et le tampon (A-D) actuellement connecté à la sortie de données (P3) est coupée et une connexion est établie entre la sortie de données (P3) et le tampon (A-D) actuellement non connecté lorsque le tampon (A-D) non connecté présente des données valablement écrites plus récentes.

2. Circuit (100) selon la revendication 1, dans lequel la première entrée de données (P1) ou la deuxième entrée de données (P2) est priorisée et la logique de commande (130) est en outre configurée
lorsqu'une demande de lecture est signalée et qu'il est simultanément signalé
qu'une écriture de premières données (D1) dans le tampon (A-D) connecté à la première entrée de données (P1), et
qu'une écriture de deuxièmes données (D2) dans le tampon (A-D) connecté à la deuxième entrée de données (P2) a été achevée
pour lire des données (D3), connecter le tampon (A-D) actuellement connecté à l'entrée de données priorisée (P1, P2) à la sortie de données (P3).

3. Circuit (100) selon la revendication 1 ou 2, dans lequel la connexion d'un tampon (A-D) à la première entrée de données (P1), à la deuxième entrée de données (P2) ou à la sortie de données (P3) comprend une modification d'un décalage d'adresse.

4. Circuit (100) selon la revendication 1 ou 2, dans lequel la connexion d'un tampon (A-D) à la première entrée de données (P1), à la deuxième entrée de données (P2) ou à la sortie de données (P3) comprend une commutation entre des chemins de signaux.

5. Circuit (100) selon l'une quelconque des revendications 1 à 4, dans lequel le circuit (100) est intégré dans un participant de bus, en particulier un émetteur-récepteur de bus.

6. Circuit (100) selon l'une quelconque des revendications 1 à 5, dans lequel la logique de commande (130) est configurée pour
définir un drapeau lorsque des données ont été valablement écrites dans une mémoire tampon (A-D) et la connexion avec la mémoire tampon (A-D) a été coupée, et
réinitialiser le drapeau de manière cyclique,
dans lequel lorsqu'un drapeau est défini, une coupure de la connexion des tampons (A-D) actuellement connectés aux première et deuxième entrées de données (P1, P2) et l'établissement d'une connexion avec un autre tampon (A-D) sont supprimés.

7. Système (1000), avec
un premier émetteur (200),
un deuxième émetteur (300),
un récepteur (400), et
un circuit (100) selon l'une quelconque des revendications 1 à 6, dans lequel
le premier émetteur (200) avec la première entrée de données (P1),
le deuxième émetteur (300) avec la deuxième entrée de données (P2) et
le récepteur (400) est connecté à la sortie de données (P3),
dans lequel les émetteurs (200, 300) sont configurés pour transmettre des paquets de données au circuit (100) par l'intermédiaire des entrées de données (P1, P2) et pour signaler au circuit (100) une fin d'une opération d'écriture.

8. Système (1000) selon la revendication 7, dans lequel le récepteur (400) est configuré pour signaler au circuit (100) une demande de lecture et pour lire un paquet de données par l'intermédiaire de la sortie de données (P3) du circuit (100).

9. Système (1000) selon l'une quelconque des revendications 7 ou 8, dans lequel le circuit (100) présente s+2 tampons (A-D), dans lequel s indique le nombre d'émetteurs (200, 300).
